Europäisches Patentamt

European Patent Office

Office européen des brevets

(11) Publication number: **0 154 262**
**A2**

## (12) EUROPEAN PATENT APPLICATION

(21) Application number: **85101911.7**

(22) Date of filing: **21.02.85**

(51) Int. Cl.⁴: **G 02 B 6/38**

(30) Priority: **24.02.84 JP 35034/84**
**18.09.84 JP 196264/84**
**26.09.84 JP 201170/84**

(43) Date of publication of application:
**11.09.85 Bulletin 85/37**

(84) Designated Contracting States:
**DE GB**

(71) Applicant: **ASAHI-SEIKI MANUFACTURING CO.LTD.**
**5050-1 Shindenbora Asahimaecho**
**Owariasahi-shi Aichi-Ken(JP)**

(72) Inventor: **Kawamura, Shuzo**
**43, Zendanacho-2-chome**
**Mizuho-ku Nagoya(JP)**

(72) Inventor: **Sakamoto, Eitaro**
**4-19, Higashiokutecho-3-chome**
**Owariasahi-shi(JP)**

(72) Inventor: **Nakatani, Takashi**
**2381-78, Aza Gozenbora**
**Oaza Omori Moryama-ku Nagoya(JP)**

(72) Inventor: **Sugiyama, Ichiro**
**33, Sonoyamacho-1-chome**
**Chigusa-ku Nagoya(JP)**

(72) Inventor: **Tokuyama, Hideyoshi**
**19, Sumiredai-1-chome**
**Seto-shi(JP)**

(74) Representative: **Kraus, Walter, Dr. et al,**
**Patentanwälte Kraus Weisert & Partner**
**Thomas-Wimmer-Ring 15**
**D-8000 München 22(DE)**

(54) Ferrule for optical fiber connector.

(57) A ferrule employed for an optical fiber connector includes a cylindrical casing formed at its fitting portion. At least three cylindrical retaining needles are press-fitted together into the casing in such a manner that they are circumscribed to each other such as to retain an optical fiber in the center thereof. All or at least one of the retaining needles is made hollow such that it is capable of being elastically deformed in its diametrical direction to thereby provide a retaining pressure. By virtue of this structure, the alignment between two optical fibers is facilitated, and the manufacture of the ferrule is also facilitated. Further, a material having a hardness equal to that of the optical fiber is filled in the hollow inside of each of the hollow needles and a space remaining in the casing, such as a space between the casing and the retaining needles. By so doing, when the ferrule end face is ground and polished, a wide joint end face is obtained in the same plane as the end face of the optical fiber. It is, therefore, possible to greatly reduce the coupling loss of optical fibers.

EP 0 154 262 A2

FERRULE FOR OPTICAL FIBER CONNECTOR   0154262

## 1  BACKGROUND OF THE INVENTION

The present invention relates to a connector employed to connect together optical fibers used in an information transmission line. More particularly, the invention pertains to a structure of a ferrule employed for a self-aligning sleeve connector for the above-described purpose.

An optical fiber consists of a core for propagation of light and a cladding which covers the core. Since the core diameter is extremely small, i.e., 100 µm or less, it is fairly difficult to connect together two cores of respective optical fibers in such a manner that their respective axes are in strict alignment with each other. In particular, an optical fiber connector which is employed demountably needs to be machined with high accuracy since the magnitude of the coupling loss of the optical fibers connected by a connector directly corresponds to the degree of accuracy with which the connector is machined. In order to overcome such a problem, various types of optical fiber connector have heretofore been proposed. However, these conventional connectors still involve difficulty in the positioning method by which the respective axes of two optical fibers are aligned with the axis of a ferrule for an optical fiber connector, and no optical fiber connector has been developed so far which satisfactorily meets the demand for easier handling and lower cost.

SUMMARY OF THE INVENTION

In view of the prevailing situation of the above-described prior art, it is an object of the present invention to provide a ferrule for an optical fiber connector which has a structure that enables the respective axes of two optical fibers to be easily aligned with the axis of the ferrule with high accuracy and reliability.

It is another object of the present invention to make it possible to manufacture at a reduced cost a ferrule for an optical fiber connector which is capable of positioning optical fibers with high accuracy.

It is still another object of the present invention to provide a ferrule for an optical fiber connector by which, when a pair of connectors are assembled together, two optical fibers are correctly aligned with each other in one straight line and the opposing end faces of the optical fibers are accurately joined together without any gap, thus minimizing the coupling loss.

To these ends, according to the invention, there is provided a ferrule for an optical fiber connector comprising: a casing having a cylindrical inner surface; and at least three cylindrical retaining needles press-fitted into the casing in inscribed relation thereto in such a manner that the retaining needles are circumscribed to each other such as to clamp an optical fiber in the central portion thereof, at least one of the retaining needles being hollow and having a spring constant in its diametrical direction which is smaller than that of the casing, and the retaining needles being arranged such that, when they are press-fitted into the casing while being circumscribed to each other, the hollow retaining needle is elastically deflected such as to provide a pressure by which the retaining needles are circumscribed to each other and a pressure by which the retaining needles and the casing are inscribed to each other.

Further, according to the invention, a material having a hardness equal to that of the optical fiber is filled in the space remaining inside the casing after the cylindrical retaining needles with interposing a optical fiber thereamong have been press-fitted into the casing. By so doing, when the end face of the fitting portion of the ferrule is ground and polished, the respective joint end faces of the optical fiber and the filling material are ground and polished in such a manner as to be flush with each other. It is, therefore, possible to join together the respective end faces of two optical fibers with a minimized coupling loss.

The above and other objects, features and advantages of the present invention will become more apparent from the following description of the preferred embodiments thereof, taken in conjunction with the accompanying drawings.

BRIEF DESCRIPTION OF THE DRAWINGS

Fig. 1 is a longitudinal section through the length of one example of the structure of a conventional ferrule for an optical fiber connector;

Fig. 2 is a longitudinal section through the length of another example of the structure of a conventional ferrule for an optical fiber connector;

Fig. 3 is a longitudinal section through the length of an optical fiber connector, which shows a pair of ferrules in a connected state;

Fig. 4 is a side elevational view of a ferrule according to the present invention;

Fig. 5 is a front elevational view of the ferrule shown in Fig. 4, as viewed at the line V-V of Fig. 4, which shows the internal structure of the ferrule in accordance with one embodiment of the invention;

Fig. 6 is a longitudinal section through the length of a hollow retaining needle employed in the ferrule according to the invention;

Fig. 7 is a longitudinal section through the length of one example of a ferrule body for the ferrule according to the invention which is assembled from parts produced by means of pressing;

Fig. 8 is a front elevational view, similar to Fig. 5, showing another embodiment of the invention which has an internal structure different from that shown in Fig. 5;

Fig. 9 is a front elevational view of a modification of the embodiment shown in Fig. 8 in which a ferrule body is employed which has the same internal structure as that of the embodiment and differs therefrom in that the inner and outer surfaces of a casing constituted by the outer periphery of its fitting portion are eccentric with each other;

Fig. 10 is a side elevational view of the ferrule shown in Figs. 5, 8 and 9 in a state wherein its end face has been ground and polished;

Fig. 11 is a side elevational view of a pair of the ferrules shown in Fig. 10 in a state wherein their respective end faces abut against each other;

Fig. 12 is a sectional view taken along the line XII-XII of Fig. 4, which shows still another embodiment of the invention which is improved such as to avoid the undesirable conditions respectively shown in Figs. 10 and 11;

Fig. 13 is a side elevational view of the embodiment shown in Fig. 12 in a state wherein its end face has been ground and polished;

Fig. 14 is a side elevational view of a pair of the ferrules shown in Fig. 13 in a state wherein they have been assembled together; and

Fig. 15 is a sectional view of a further embodiment of the invention which is improved in a manner similar to that of the embodiment shown in Fig. 12.

DESCRIPTION OF THE PREFERRED EMBODIMENTS

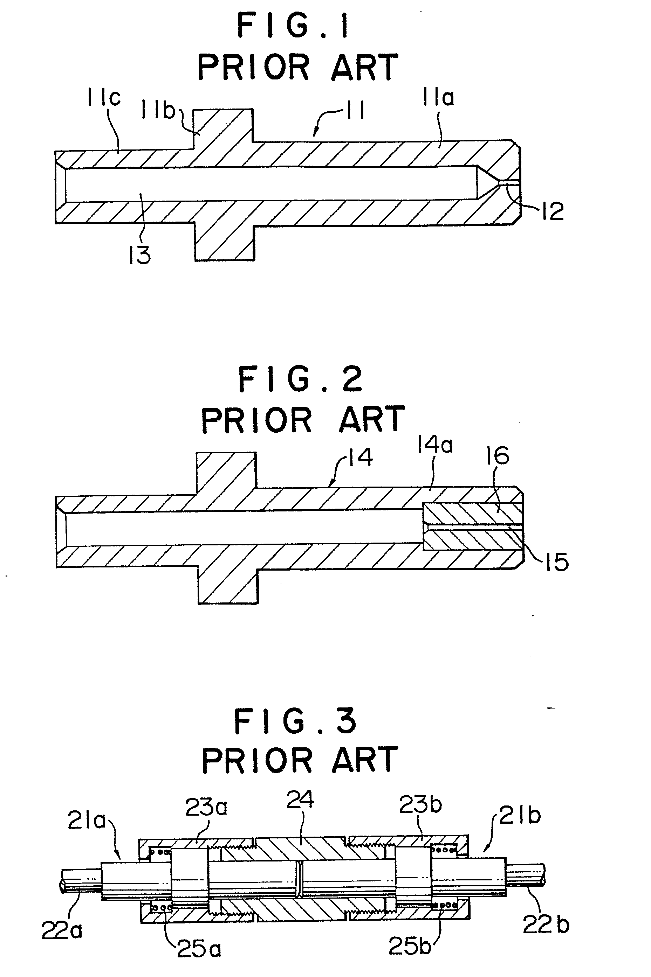

Prior to the description of the preferred embodiments of the present invention, the basic structure of a conventional optical fiber connector will be described hereinunder with reference to Figs. 1 to 3.

Referring first to Fig. 1, a precision finished metal ferrule 11 for an optical fiber connector has a fitting portion 11a which is fitted into a fitting sleeve when a pair of ferrules are connected in such a manner that their opposing end faces oppose each other. The ferrule 11 further has a projecting portion 11b and a housing portion 11c for housing an optical fiber in such a manner as to keep it secured. A small bore 12 for receiving the optical fiber in a fixed state is formed in the ferrule 11 coaxially with the fitting portion 11a, the small bore 12 having an inside diameter slightly larger than the outside diameter of the optical fiber. Further, the ferrule 11 is formed with a through-hole 13 for fixedly receiving the optical fiber together with its protecting film or films which covers the same. Referring next to Fig. 2 which shows another example of the basic structures of a conventional optical fiber connector, a ferrule 14 includes a retainer portion 16 of ceramics which is secured to a part of a fitting portion 14a where the ferrule 14 opposes another ferrule, the retainer portion 16 having in its center a small bore 15 formed coaxially with the fitting portion 14a. The other portions of the ferrule 14 are the same as those in the ferrule 11 shown in Fig. 1.  The optical fibers respectively retained by a pair of ferrules such as those shown in Figs. 1 and 2 are, as shown in Fig. 3, connected together in such a manner that their respective end faces oppose each other.  In Fig. 3, reference numerals 21a, 21b denote ferrules which respectively receive in a fixed manner optical fibers 22a, 22b which are to be connected together. This is done in such a manner that the respective portions of the optical fibers 22a, 22b including protecting film portions are received by the corresponding through-holes 13 and the respective portions of the optical fibers 22a, 22b from which the protecting film portions have been removed are received by the small bores 12 or 15.  The respective fitting portions of the ferrules 21a, 21b are forced into the precision finished hollow inside of a fitting sleeve 24 and are secured by means of clamping members 23a, 23b through springs 25a, 25b, whereby the optical fibers are aligned with each other in such a manner that their respective end faces oppose each other.  In this case, the fitting portions received in the fitting sleeve 24 from both ends thereof are allowed to coaxially abut against each other with high accuracy such that the optical fibers 22a, 22b are aligned with each other, whereby the coupling loss is minimized when light is coupled from one optical fiber into the other. As will be understood from the above description, the dimensional accuracy of the ferrule and the sleeve is an important factor in determining the performance characteristic of the optical fiber connector. In particular, it is necessary to ensure a high degree of concentricity between the fitting portions 11a or 14a and the small bore 12 or 15 and a high degree of roundness of the fitting portion itself in order to improve the performance of the optical fiber connector. Further, it is very expensive to machine the small bore and to effect machining for the purpose of ensuring a high degree of concentricity between the small bore and the fitting portion.

According to the present invention, in place of the small bores 12 and 15 respectively shown in Figs. 1 and 2, the gap defined between three retaining needles, which is a prior art arrangement, is utilized to allow two optical fibers to be centered. Further, at least one of the three retaining needles is constituted by a hollow retaining needle, and the relationship between the hollow retaining needle and the fitting portion is set such that the following relation is satisfied:

$$E_R\left(\frac{T}{R}\right)^3 >> E_r\left(\frac{t}{r}\right)^3$$

where: $E_R$ represents the elastic modulus of a material for the fitting portion;

$E_r$ the elastic modulus of a material for the hollow retaining needle;

$\underline{t}$ the wall thickness of the hollow retaining needle;

r the radial distance between the axis and the center line of the wall of the hollow retaining needle;

T the peripheral wall thickness of the fitting portion into which the hollow retaining needle is press-fitted; and R the radial distance between the axis and the center line of the wall of the fitting portion.

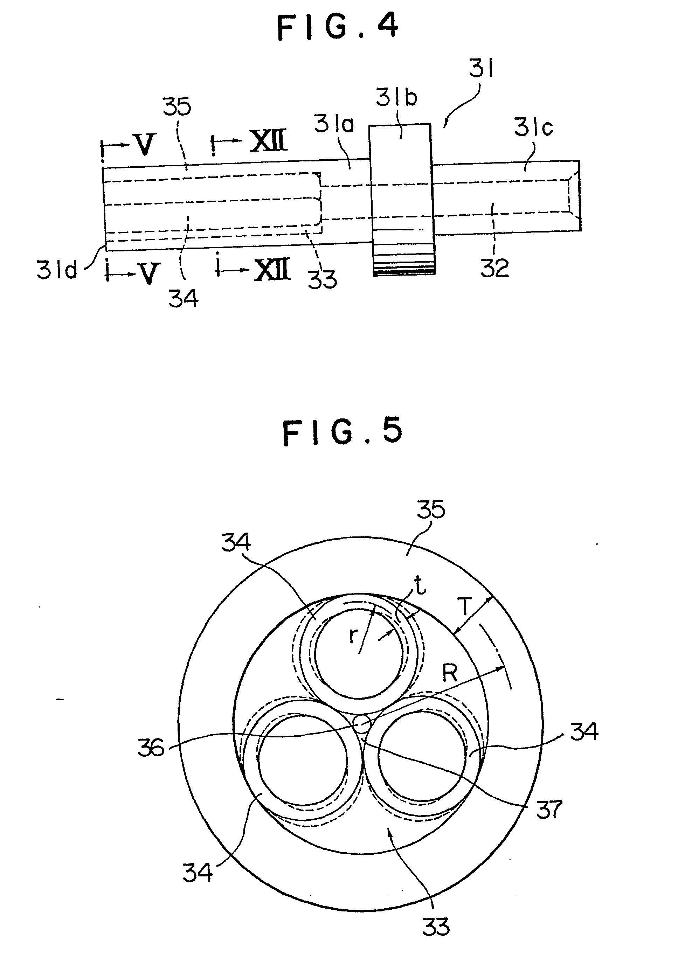

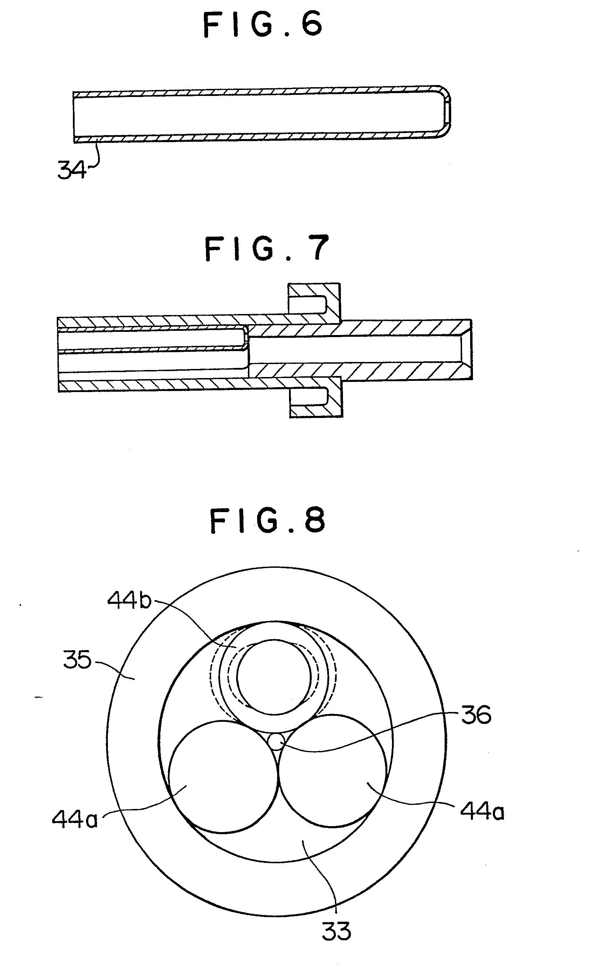

Referring first to Figs. 4 and 5, one embodiment of the invention will be described hereinunder in detail. A ferrule 31 consists of a fitting portion 31a, a projecting portion 31b and a housing portion 31c. The ferrule 31 is provided with a through-hole 32 which extends from the end face of the housing portion 31c in the axial direction of the ferrule 31. The through-hole 32 has an inside diameter slightly larger than the outside diameter of an optical fiber with its protecting film or films. The through-hole 32 is continuous with a securing bore 33 which is coaxially formed such as to extend from the end face of the fitting portion 31a in the axial direction of the ferrule 31. The securing bore 33 has an inside diameter (explained later) which is larger than that of the through-hole 32. Into the securing bore 33 are press-fitted three cylindrical hollow retaining needles 34 each having a length equal to the depth of the securing bore 33 and a configuration such as that exemplarily shown in Fig. 6 in such a manner that they are circumscribed to each other.  In this case, for example, the wall thickness (t) of each of the hollow retaining needles 34 is made smaller than the wall thickness (T) of a casing 35 which is constituted by the outer periphery of the fitting portion 31a provided therein with the securing bore 33, as described in the above expression of relation, whereby the spring constant in relation to the diametrical deflection of the hollow retaining needle 34 having an annular cross-section is set such as to be much smaller than that of the casing 35 having a similar annular cross-section.  Further, the inside diameter of the casing 35 (i.e., the diameter of the securing bore 33) is set such as to be slightly smaller than the diameter of the circumscribed circle defined by the three hollow retaining needles 34 before they are press-fitted into the casing 35, whereby an interference is provided.  Thus, when the hollow retaining needles 34 are press-fitted into the securing bore 33, each of the hollow retaining needles 34 is deflected in a slightly elliptical shape in the manner shown by the dotted line in Fig. 5 (the deflection is exaggeratedly shown in Fig. 5 for explanatory convenience).  By this arrangement, when the hollow retaining needles 34 are press-fitted into the securing bore 33, they are prevented from moving inside the securing bore 33 and from coming out of it by virtue of the elastic deflection of the hollow retaining needles 34 as a result of the interference.  Thus, the hollow retaining needles 34 are secured in a predetermined position. In this case, the casing 35 is hardly distorted owing to the above-described spring constant relationship (that is, the spring constant in relation to the diametrical deflection of each of the hollow retaining needles 34 is much smaller than that of the casing 35). Accordingly, it becomes unnecessary to grind and polish the casing 35 again when the ferrule 31 is fitted into the fitting sleeve 24, whereas the conventional ferrule 14 shown in Fig. 2 disadvantageously requires the outer periphery of its fitting portion 14a to be ground and polished again to a set dimension while maintaining the concentricity of the fitting portion 14a with the small bore 15 since it is not possible to insert the ferrule 14 into the fitting sleeve 24 due to the distortion of the fitting portion 14a produced when the ceramic retainer portion 16 is fitted into the fitting portion 14a. Furthermore, according to the invention, since it is relatively easy to precisely machine the outer periphery of each hollow retaining needle 34 and the inner periphery of the casing 35 of the fitting portion 31a, it is possible to increase the degree of concentricity between the casing 35 and the axis of an optical fiber 36 clamped by the hollow retaining needles 34 fitted into the casing 35 and to easily obtain a gap 37 which is equivalent to the small bore 12 or 15 whose diameter is made coincident with the diameter of the optical fiber to be secured therein.

As will be understood from the above description, it is, according to the present invention, unnecessary to precisely machine the small bore 12 or 15 which requires a high degree of machining technique since the small bore 12 or 15 needs to be coaxial with the fitting portion 11a or 14a and substantially equal in diameter to the optical fiber to be secured therein, and it is possible to easily obtain the gap 37 for receiving the optical fiber 36 which is coaxial with the fitting portion 31a by virtue of the three-point supporting structure constituted by the hollow retaining needles 34. Further, although it not possible for the conventional ferrule to cope well with thermal expansion caused by changes in temperature of the optical fiber connector which can be brought about by, for example, the atmospheric air present at the place where the connector is used, the ferrule of the invention is capable of maintaining the optical fiber in the correctly retained state in the face of such thermal expansion by virtue of the elastic deflection of the casing 35 and the hollow retaining needles 34. According to the invention, further, gap of a concave triangular shape defined by three circumscribed needles 34 is used for filling an adhesive employed for bonding the cladding of the optical fiber to the small bore, whereby it is advantageously possible to obtain a reliable bonding effect. Moreover, employment of the ferrule structure according to the invention gives the ferrule body a structure which enables it to be fabricated by a press, as shown in Fig.

7, whereby it becomes possible to mass-produce the ferrule at a reduced cost.

Referring next to Fig. 8, there is shown a second embodiment of the present invention. This embodiment differs from the embodiment shown in Fig. 5 in that, among three retaining needles press-fiteed into the casing 35, only one needle 44b is hollow, and the other two are solid cylindrical needles 44a which are not deformed. The two solid cylindrical needles 44a have dimensions which are set in such a manner that, when the needles are inserted into the securing bore 33 formed in the fitting portion 31a while being circumscribed to each other and the portion of the optical fiber 36 whose protecting film has been removed is placed in the valley defined by the respective outer peripheral surfaces of the two circumscribed solid cylindrical needles 44a, the respective axes of the ferrule 11 and the optical fiber 36 are brought into alignment with each other.

On the other hand, the hollow retaining needle 44b has, before it is deformed, an outside diameter which is slightly larger than that of each of the solid cylindrical needles 44a. Further, the wall thickness of the hollow retaining needle 44b is made smaller than that of the casing 35 which is constituted by the outer periphery of the fitting portion 31a in which is provided the securing bore 33, whereby the spring constant in relation to the diametrical deflection of the hollow retaining needle 44b having an annular cross-section is set such as to be much smaller than that of the casing 35 having a similar annular cross-section. Moreover, the inside diameter of the casing 35 (the diameter of the securing bore 33) is made slightly smaller than the diameter of the circumscribed circle defined by the three needles 44a, 44b before they are press-fitted into the casing 35, whereby an interference is provided. Thus, when the needles 44a, 44b are press-fitted into the securing bore 33, the hollow retaining needle 44b is deflected in a slightly elliptical shape in the manner shown by the dotted line in Fig. 8 (the deflection is exaggeratedly shown in Fig. 8 for explanatory convenience). Accordingly, when the three needles 44a, 44b are press-fitted into the securing bore 33 in a state wherein the optical fiber 36 is clamped in the gap defined among the three needles, the hollow retaining needle 44b is deflected by an amount corresponding to the above-described interference, whereby it is possible to resiliently secure the optical fiber 36 between the two solid cylindrical needles 44a by virtue of the elastic deflection of the hollow retaining needle 44b as a result of the interference. In this case, the casing 35 is not distorted owing to the above-described spring constant relationship (that is, the spring constant in relation to the diametrial deflection of the hollow retaining needle 44b is much smaller than that of the casing 35). Thus, the optical fiber 36 is positioned and secured in such a manner that the axis of the optical fiber 36 is aligned with the axis of the casing 35 (the axis of the ferrule 31) by means of the casing 35, which is not deformed, and the solid cylindrical needles 44a, which are not deformed either.

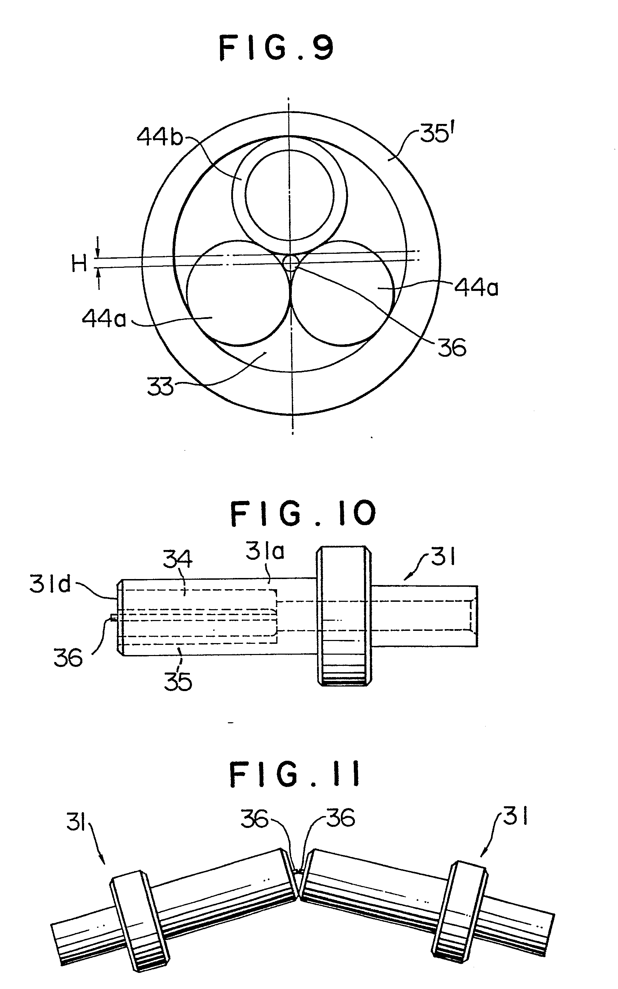

Fig. 9 shows a modification of the embodiment shown in Fig. 8. The arrangement of this modification is similar to that of the embodiment shown in Fig. 8 in the employment of two solid cylindrical needles 44a and one hollow retaining needle 44b. However, in the modification, the respective axes of the outer and inner peripheral surfaces of a casing 35' are eccentric with each other. In this case, the eccentric amount H between the outer and inner peripheral surfaces of the casing 35' is measured and utilized, together with the diameter of the optical fiber 36 to be retained, in order to prepare in advance a conversion table for selecting the diameter of each of the solid cylindrical needles 44a with which the outer periphery of the casing 35' and the optical fiber 36 can be made coaxial with each other. Then, from the previously prepared solid cylindrical needles 44a which have various diameters, two needles 44a are selected according to the conversion table and are inserted into the securing bore 33 and then secured by means of an adhesive. In this case, the optical fiber 36 is positioned in such a manner that it is placed in the valley defined by the respectively outer peripheral surfaces of the two solid cylindrical needles 44a and is clamped by the hollow retaining needle 44b and then the thus assembled fiber and needles are inserted into the securing bore 33 in such a manner as to be secured therein.

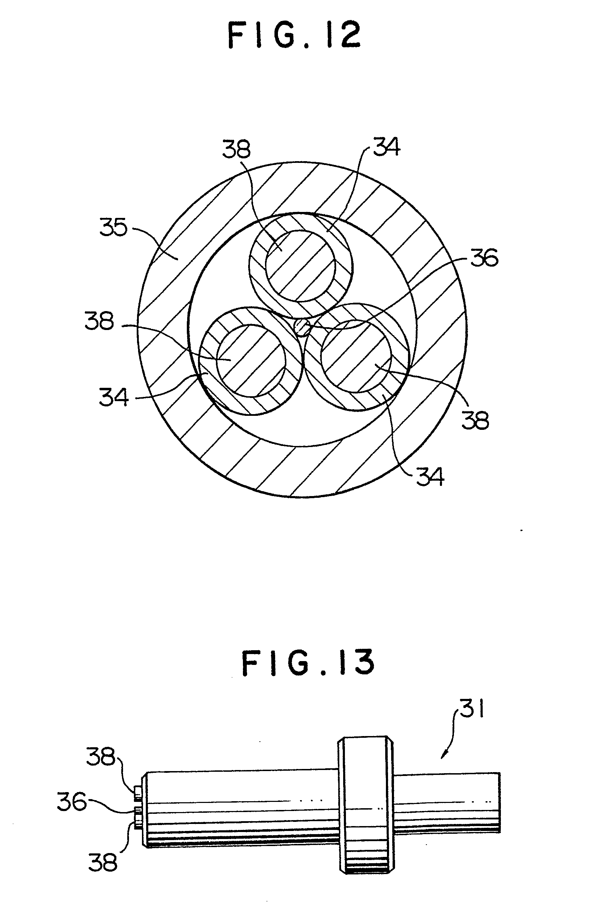

The above-described embodiments still involve the following problem: Namely, the optical fiber consists of a core for propagation of light and a cladding which covers the core, and the core diameter is extremely small, i.e., 100 µm or less. For this reason, in order to connect together two optical fibers with a minimized coupling loss, it is necessary to correctly connect together the respective joint end faces of the fibers in such a manner that they are parallel to each other and no gap is present therebetween. In other words, since it is necessary to make the respective fitting portions 31a of two ferrules 33 correctly coincide with each other, the end face 31d (see Fig. 4) of the fitting portion 31a of each ferrule 33 is ground and polished in such a manner that the end face 31d is perpendicular to the axis of the ferrule 33. However, there is a difference in hardness between the optical fiber itself and the retaining needles for retaining the fiber and the casing 35. In consequence, when the end face 31d is ground and polished, each of the portions has a different amount of grinding and polishing, resulting disadvantageously in the fact that the respective polished faces of the optical fiber 36 and the hollow retaining needles 34 and the casing 35 are not flush with each other. More specifically, as shown in Fig. 10 which is a side elevational view of the ferrule 31, the end face portion of the hollow retaining needles 34 and the casing 35 is undesirably ground and polished more than the end face portion of the optical fiber 36, so that the optical fiber 36 unfavorably projects beyond the end face 31d (the projecting state is exaggeratedly shown in the Figure). Accordingly, when a pair of ferrules for optical fiber connector members are assembled together for the purpose of connecting together the associated optical fibers (that is, when the respective end faces 31d of the fitting portions 31a are joined together), even if the respective polished faces of the optical fibers 36 are joined together, the respective polished faces of the hollow retaining needles 34 and the casings 35 of the pair of ferrules 31 are not in contact with each other but simply oppose each other with the ferrules 31 in alignment. Under this state, if the ferrules 31 are forcedly connected together, they are angularly displaced, resulting in an undesirably unstable connection in which the polished faces only partially abut against each other rather than abutting against each other over their respective entireties in the manner shown in Fig. 11 which illustrates the ferrules 31 in an assembled state (the undesirably connected state is exaggeratedly shown in the Figure). In consequence, the joined optical fibers 36 do not assume a straight line form but are bent at the junction, which disadvantageously leads to an increase in the coupling loss. The embodiments of the invention which will be described hereinunder with reference to Figs. 12 to 15 are arranged such as to overcome the above-described problem.

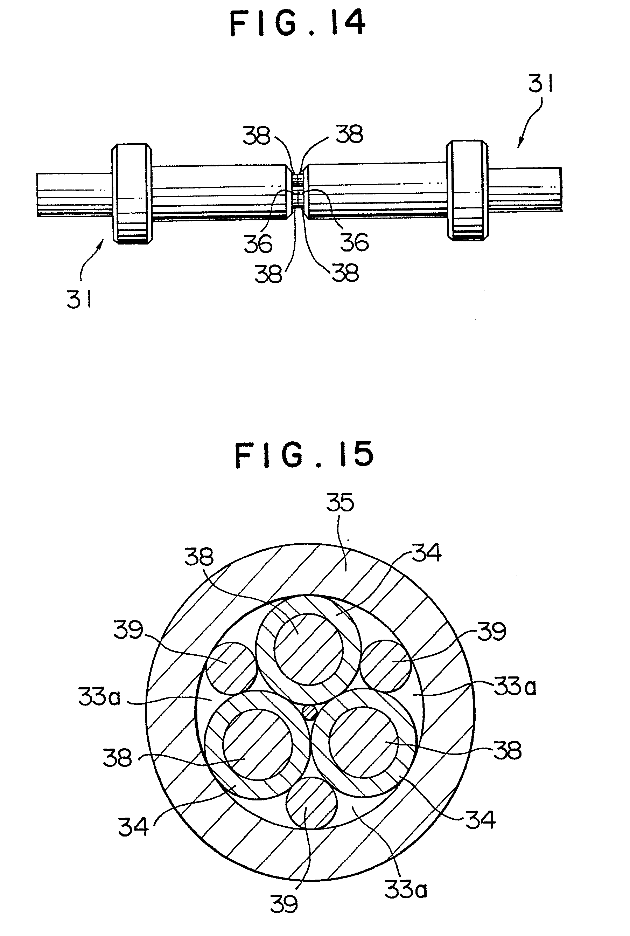

Referring to Fig. 12 which is a sectional view taken along the line XII-XII of Fig. 4, the structure of this embodiment is similar to that of the embodiment shown in Fig. 5. In this embodiment, however, a step is additionally provided in which a filler 38 having a hardness equal to that of the optical fiber 36 is filled in the hollow inside of each of the hollow retaining needles 34. This step is carried out after the optical fiber 36 has been positioned in the center of the casing 35 and secured, and before the end face 31d is finished with grinding and polsihing in such a manner that the end face 31d is perpendicular to the axis of the ferrule 31. By virtue of this arrangement, when the end face 31d of the ferrule 31 is ground and polished in such a manner that the end face 31d is perpendicular to the axis of the ferrule 31, since the optical fiber 36 and the filler 38 are equal to each other in the hardness, the end face 31d is ground and polished in such a manner that the respective polished end faces of the optical fiber 36 and the filler 38 are flush with each other and in combination constitute a plane which is perpendicular to the axis of the ferrule 31 as shown in Fig. 13 (the favorably ground and polished state is exaggeratedly shown in the Figure). Thus, when a pair of optical fiber connector ferrules are assembled together for the purpose of connecting together optical fibers, the respective polished end faces of the optical fiber and the filler in one ferrule simultaneously abut against those in the other ferrule in the manner shown in Fig. 14 which illustrates the ferrules in an assembled state (the Figure exaggeratedly shows the state). For this reason, the respective polished end faces of the optical fibers 36 retained by the associated ferrules are joined together over their respective entireties and without any gap therebetween, whereby the optical fibers 36 are connected in a straight line form.

Referring next to Fig. 15 which is a sectional view of the fitting portion 31a of the ferrule 31, there is shown a further embodiment of the present invention. In this embodiment, in addition to the step of filling the filler 38 into the hollow inside of each of the hollow retaining needles 34, a step is further provided in which a filler 39 having a hardness equal to that of the optical fiber 36 is filled in a space 33a in the securing bore 33 (the space formed between the hollow retaining needles 34 when they are inserted into the securing bore 33). By virtue of this arrangement, when the end face 33d of the ferrule 33 is ground and polished in such a manner that the end face 33d is perpendicular to the axis of the ferrule 33, since the optical fiber 36 and the fillers 38, 39 are equal to each other in the hardness, the end face 33d is ground and polished in such a manner that the respective polished end faces of the optical fiber 36 and the fillers 38, 39 are flush with each other and in combination constitute a plane which is perpendicular to the axis of the ferrule 33. Thus, when a pair of optical fiber connector ferrules are assembled together for the purpose of connecting the associated optical fibers to each other, the respective polished end faces of the optical fiber and the fillers 38, 39 in one ferrule simultaneously abut against those in the other ferrule. In consequence, the respective polsihed end faces of the optical fibers 36 retained by the associated ferrules are joined together over their respective entireties and without any gap therebetween, whereby the optical fibers 36 are connected together in a straight line form.

The present invention is not necessarily limitative to the above-described embodiments and various modification and changes may be imparted thereto without departing from the spirit and scope of the invention which is limited solely by the appended claims. For example, the number of retaining needles employed in the optical fiber connector ferrule of the invention is not necessarily limited to three and may be increased as desired. Further, when solid cylindrical retaining needles are employed as the retaining needles, the number of hollow retaining needles employed in combination with the solid cylindrical retaining needles is not necessarily limited to one, and it will be apparent to those skilled in the art that it is possible to obtain a

0154262

similar advantageous effect by employing two or more hollow retaining needles according to need.

0154262

WHAT IS CLAIMED IS:

1.       A ferrule for an optical fiber connector comprising:

a casing having a cylindrical inner surface; and

at least three cylindrical retaining needles press-fitted into said casing in inscribed relation thereto in such a manner that said retaining needles are circumscribed to each other such as to clamp an optical fiber in the central portion thereof, at least one of said retaining needles being hollow and having a spring constant in its diametrical direction which is smaller than that of said casing, and said retaining needles being arranged such that, when they are press-fitted into said casing while being circumscribed to eath other, said hollow retaining needle is elastically deflected such as to provide a pressure by which said retaining needles are circumscribed to each other and a pressure by which said retaining needles and said casing are inscribed to each other.

2.       A ferrule according to Claim 1, wherein said retaining needles are three hollow needles.

3.       A ferrule according to Claim 1, wherein said retaining needles are two solid needles and one hollow needle.

4.       A ferrule according to Claim 3, wherein said casing has a cylindrical outer surface which is eccentrical with respect to its inner surface.

- 23 - 0154262

5.      A ferrule according to Claim 1, wherein a material having a hardness equal to that of said optical fiber is filled in the space remaining inside said casing after said retaining needles have been press-fitted into said casing.

6.      A ferrule according to Claim 5, wherein said cylindrical retaining needles are three hollow needles, and a material having a hardness equal to that of said optical fiber is filled in the hollow inside of each of said hollow retaining needles.

7.      A ferrule according to Claim 6, wherein a material having a hardness equal to that of said optical fiber is further filled in a space defined between the inner surface of said casing and the respective outer surfaces of said cylindrical retaining needles.

1/6

0154262

FIG.1
PRIOR ART

FIG.2
PRIOR ART

FIG.3
PRIOR ART

# FIG.4

# FIG.5

0154262

# F I G . 6

34

# F I G . 7

# F I G . 8

44b

35

36

44a

44a

33

# F I G . 9

# F I G . 10

# F I G . 11

# FIG.12

# FIG.13

0154262

# FIG. 14

# FIG. 15